# EUROPÄISCHE PATENTSCHRIFT

(11) **EP 0 513 740 B1**
(45) Veröffentlichungstag und Bekanntmachung des Hinweises auf die Patenterteilung: **16.02.1994**
(21) Anmeldenummer: 92108001.6
(22) Anmeldetag: 12.05.1992
(51) Int. Cl.: F16L 5/02, E04B 1/68, E04G 15/06

(54) **Schalung**
Shuttering
Coffrage

(30) Priorität: 16.05.1991 DE 9106070 U
(43) Veröffentlichungstag der Anmeldung: 19.11.1992
(73) Patentinhaber: Fischer, Willibald, D-84130 Dingolfing (DE)
(72) Erfinder: Fischer, Willibald, D-84130 Dingolfing (DE)
(74) Vertreter: Grünecker, Kinkeldey, Stockmair & Schwanhäusser Anwaltssozietät

(56) Entgegenhaltungen:
- DE-A- 2 913 968
- DE-B- 1 259 546

## Beschreibung

Die Erfindung bezieht sich auf eine verlorene Schalung für Betonbauten der im Oberbegriff von Anspruch 1 erläuterten Art.

Eine derartige Schalung ist aus der DE-B-1 259 546 bekannt. Die bekannte Schalung besteht aus einer Schalungswandung aus zwei Streifen eines Streckmetalls, zwischen denen eine Aufnahmeeinrichtung für ein elastisches Fugenband zur Herstellung einer gegen Wasser abgedichteten Fuge angeordnet ist. Das elastische Fugenband kann entweder mit einem verbreiterten Rand in einem entsprechend gebogenen Bereich der Schalungswandung festgeklemmt, oder, falls eine feste Verbindung gewünscht wird, mit Hilfe von Schrauben, Nieten und unter Verwendung von Gegenstücken an der Schalungswandung befestigt werden. Eine solche Befestigung ist jedoch äußerst aufwendig.

Für bestimmte Verwendungszwecke, wie beispielsweise für Wasser- und Klärwerke oder dgl., müssen bestimmte Wanddurchbrüche für Rohre oder Kabel wasserdicht sein. Aus der DE-A-29 13 968 ist eine Rohrdurchführung für diesen Anwendungszweck bekannt. Diese Rohrdurchführung ist als kompaktes Bauteil ausgebildet und enthält ein Futterrohr, das sich durch den Wanddurchbruch erstreckt und mit einem Kragen zum Abdichten und Verankern in der Wand eingebettet ist. Dieses Futterrohr kann jedoch nicht mehr mit Beton verfüllt werden, vielmehr werden im Inneren des Futterrohrs zwei Leitungsrohrstücke zum Anschluß an die entsprechenden durch den Wanddurchbruch zu führenden Leitungen mit Hilfe einer beide Leitungsrohre umgebenden Buchse gehalten. Die Buchse muß gegenüber dem Futterrohr abgedichtet werden. Auch diese Ausgestaltung ist ersichtlich kompliziert herzustellen.

Weiterhin können wasserdichte Wanddurchbrüche für Rohre oder Kabel dadurch hergestellt werden, daß zunächst mit normalen Schalungen ein Durchbruch ausgeschalt wird, der die Größe der Kabel bzw. Rohre übersteigt. Die Schalungswandung wird durch verfügbares Schalungsmaterial, meistens durch Schalungsbretter, erstellt. Um die notwendige Festigkeit sicherzustellen, müssen die Schalungswände quer über den Durchbruch ausgesteift werden, was beim Hindurchführen der Rohre und Kabel stört. Sind die Rohre bzw. Kabel eingelegt, so wird der Zwischenraum zwischen diesen und der bisherigen Wandung, nach Entfernen der Schalung, mit Beton verfüllt, wobei ein guter Kontakt zwischen den beiden Betonchargen sicherzustellen ist, damit sich durch Betonschwund keine Risse bilden, durch die Wasser hindurchsickern kann.

Der Erfindung liegt somit die Aufgabe zugrunde, eine einfach herzustellende, verlorene Schalung zu schaffen, mit der das Durchsickern von Wasser durch Schwindrisse oder Fugen verhindert werden kann.

Die Aufgabe wird durch die kennzeichnenden Merkmale des Anspruches 1 gelöst.

Durch das erfindungsgemäß verwendete Material für die Schalungswandung, d.h. die Verstärkung des Metallblechs durch beidseitig aufgebrachte quer- oder längsverlaufende Stäbe wird die Schalungswandung genügend stabil, um eine aus einem Blechmaterialstreifen bestehende Wassersperre einfach anschweißen zu können. Damit entfallen die komplizierten Befestigungsstücke, obwohl die Wassersperre trotzdem formstabil und in der vorbestimmten Lage zur Schalungswandung gehalten werden kann. Durch die Quer- und Längsstäbe ist darüber hinaus die Schalungswandung in der Lage, wesentlich höheren Betondrücken standzuhalten als dies ein einfaches durchbrochenes oder strukturiertes Metallblech könnte.

Anspruch 2 beschreibt eine besonders bevorzugte Ausgestaltung des Metallblechs.

Die Ansprüche 3 bis 6 beschreiben ein besonders bevorzugtes Ausführungsbeispiel der erfindungsgemäßen Schalung zum Erstellen von Wanddurchbrüchen oder dgl.

Die in den Ansprüchen 7 und 8 beschriebene Schalung ist besonders zum Abschalen von Wandabschlüssen geeignet.

Die Schalung wird durch den in den Ansprüchen 9 und 10 beschriebenen Gitterträger noch weiter versteift.

Ausführungsbeispiele der erfindungsgemäßen Schalung werden nachfolgend anhand der Zeichnungen näher erläutert.

Es zeigen:
- Fig. 1: eine perspektivische Darstellung eines ersten Ausführungsbeispieles einer Schalung,
- Fig. 2: den Schnitt II-II aus Fig. 1,
- Fig. 3: ein weiteres Ausführungsbeispiel einer erfindungsgemäßen Schalung.
- Fig. 4: die Schalung aus Fig. 3 mit einer bekannten Versteifung, und
- Fig. 5: eine Draufsicht auf Fig. 4.

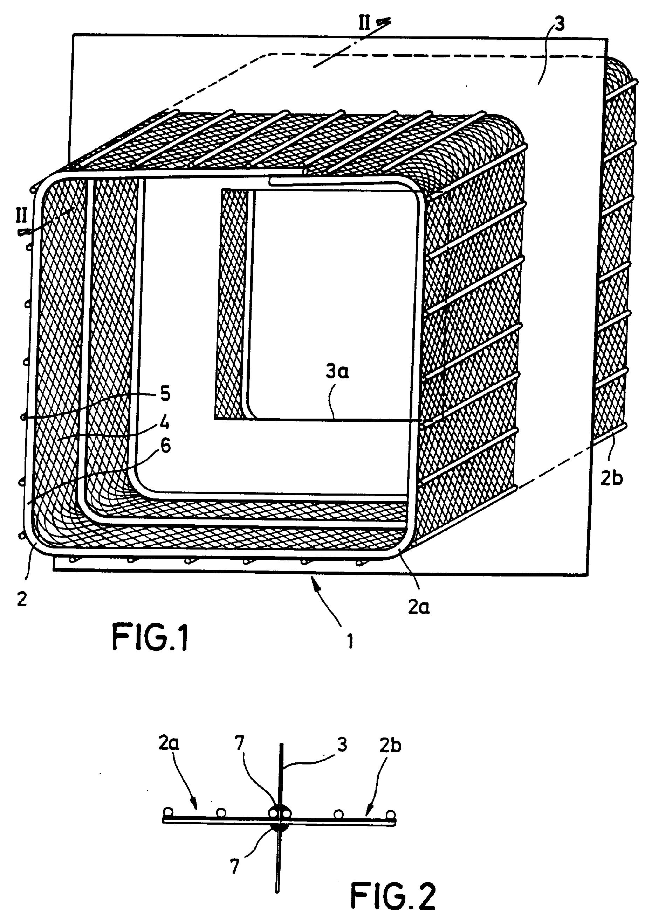

Aus Fig. 1 ist eine Schalung 1 zum Ausschalen eines Durchbruchs in einer Betonwandung gezeigt. Die Schalung 1 weist eine Schalungswandung 2 in Form zweier Streifen 2a, 2b eines Schalungsmaterials auf, zwischen denen eine Wassersperre 3 angeordnet ist. Die Streifen 2a, 2b bestehen aus einem Streckmetall-Blechstreifen 4, der zwischen gitterförmig angeordneten Querstäben 5 und Längsstäben 6 eingeschweißt wurde. Die Quer- und Längsstäbe 5, 6 bestehen aus Baustahl. Die Streifen 2a, 2b sind jeweils zu einem geschlossenen Ring mit quadratischem Querschnitt verbunden, deren Innenweite etwa der Größe des Durchbruches vor dem Einführen der Kabel bzw. Rohre entspricht.

Die Wassersperre 3 besteht aus einem rahmenförmigen Metallblechzuschnitt mit einer Innenöffnung 3a, wobei die Innenöffnung 3a kleiner ist als die Innenweite des durch die Streifen 2a, 2b gebildeten Rings und die äußere Breite des Metallblechzuschnittes die Außenweite des Rings übersteigt. Die Öffnung 2a ist jedoch größer als diejenige Öffnung, die für die Kabel bzw. Rohre benötigt wird.

Zum Herstellen der Schalung 1 werden zunächst die Streifen 2a, 2b zur gewünschten Ringform gebogen und danach miteinander fluchtend ausgerichtet und mit einer ihrer Stirnseiten jeweils auf gegenüberliegende, flächige Seiten der Wassersperre 3 stumpf aufgeschweißt (Schweißnähte 7). Auf diese Weise wird die Wassersperre 3 in einer senkrechten Richtung zur Schalungswandung 2 fixiert und steht sowohl an der Innenseite der Schalungswandung 2 als auch an ihrer Außenseite vor. Durch die gewählte Art der Verschweißung wird sichergestellt, daß die Abdichtung durch die durchgehende Wassersperre auch dann noch aufrechterhalten wird, wenn an den Schweißnähten Korrosion auftreten sollte.

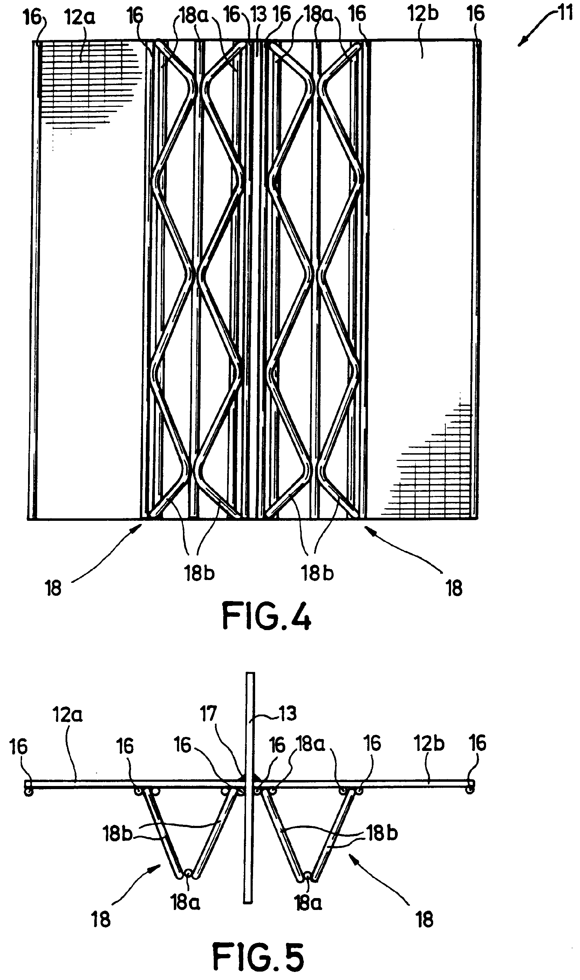

Beim Herstellen eines Durchbruchs wird die Schalung 1 als verlorene Schalung verwendet und zunächst zur Herstellung der anfänglichen Größe des Durchbruches eingesetzt, wobei zunächst die sich an der Außenseite der Schalung 1 erstreckenden Bereiche der Wassersperre 3 einbetoniert werden. Nach dem Durchführen der Rohre oder Kabel wird der Zwischenraum zwischen diesen und der Innenseite der Schalungswandung 2 mit Beton verfüllt, so daß sich die Schalungswandung 2 im Übergangsbereich zwischen dem zunächst eingebrachten und dem nachträglich eingebrachten Beton befindet. Durch das verwendete Streckmetall und die beidseitig des Streckmetalls angeordneten Stäbe wird eine gute Verbindung zwischen beiden Betonchargen erzielt, wobei der durch Schwundrisse beonders gefährdete Bereich zusätzlich durch die Wassersperre 3 abgedeckt wird. Zur weiteren Aussteifung der Schalung 1 können an der Innenbzw. Außenseite der Schalungswandung 2 nicht gezeichnete, gitterförmige Aussteifungsträger (s. Fig. 4 und 5) angeschweißt oder sonstwie befestigt werden.

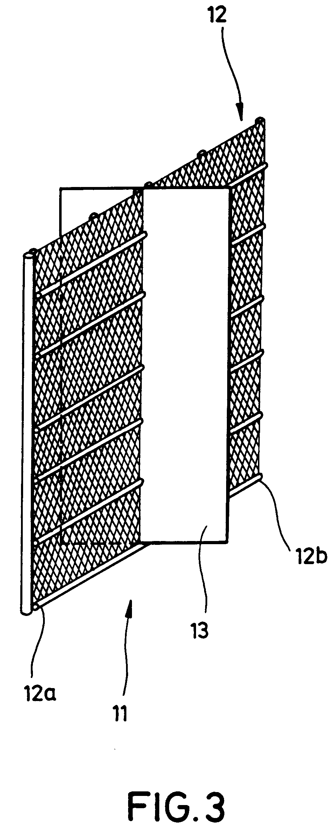

Fig. 3 zeigt eine weitere Schalung 11, die sich insbesondere zur wasserdichten Abschalung von Wandanschlüssen od.dgl. eignet. Es ist jedoch auch möglich, die Schalung 11 als Grundelement zu verwenden, die zum Verschalen verschiedener Durchbrüche zu unterschiedlichen Formen zusammengestellt werden. Die Schalung 11 besteht wiederum aus einer Schalungswandung 12 in Form zweiter planer Streifen 12a, 12b, die fluchtend zueinander ausgerichtet und mit ihren Längskanten jeweils auf zwei sich gegenüberliegenden Flächen einer Wassersperre 13 stumpf angeschweißt sind. Für die Schalungsstreifen 12a, 12b wird das bereits anhand der Fig. 1 beschriebene Material verwendet. Die Wassersperre 13 ist ein Blechstreifen, der rechtwinklig zur Schalungswandung 12 verläuft und beidseitig über die Schalungswandung 12 vorsteht.

Zum Verschalen von wasserdichten Wandanschlüssen wird zunächst der zuerst zu erstellende Wandabschnitt auf einer der Seiten der Schalungswandung 12 aufbetoniert, wobei die an dieser Seite vorstehende Wassersperre 13 einbetoniert wird. Dann wird der zweite Wandungsabschnitt auf der gegenüberliegenden Seite der Schalungswandung 12 aufbetoniert, so daß sich die Schalungswandung 12 wiederum im Übergangsbereich zwischen den beiden Wandabschnitten befindet und sich die Wassersperre quer über den durch Schwundrisse gefährdeten Bereich erstreckt.

Die Schalung 11 kann, wie die Fig. 4 und 5 zeigen, bei Bedarf durch an sich bekannte Gitterträger 18 od.dgl. ausgesteift werden, wobei die Gitterträger 18 aus drei jeweils die Spitzen eines Dreiecks bildenden Längsstäben 18a aus Baustahl, die von wenigstens zwei, wellenförmig gebogenen Baustahlstäben 18b an ihrem Platz gehalten werden. Die Größe der Gitterträger 18 wird zusätzlich zur gewünschten Aussteifungswirkung auch durch den Abstand zwischen den Längsstäben 16 der Wandungsabschnitte 12a und 12b bestimmt, so daß die beiden Längsstäbe 18a die nicht durch einen Wellenstab 18b miteinander verbunden sind an jeweils einem Längsstab 16 angeschweißt werden können.

In Abwandlung der beschriebenen und gezeichneten Ausführungsbeispiele kann die erfindungsgemäße Schalung auch für andere Verwendungszwecke eingesetzt werden, wo Wasserdichtheit erforderlich ist.

Die Wassersperre, insbesondere in Fig. 1, muß nicht unbedingt einstückig ausgebildet sein, sondern kann aus Einzelteilen zusammengesetzt werden, die zweckmäßigerweise untereinander verschweißt wurden. Statt des Streckmetallblechs können andere durchbrochene oder strukturierte Bleche, wie beispielsweise Loch- oder Waffelbleche, verwendet werden. Für bestimmte Verwendungszwecke kann die Schalungswandung nur einen Ring bzw. einen Streifen aufweisen, an dessen Stirnseite jeweils die Wassersperre befestigt ist. Falls erforderlich, kann auch die Wassersperre derart an der Schalungswandung befestigt sein, daß sie nur von einer Seite der Schalungswandung vorsteht.

## Patentansprüche

1. Verlorene Schalung für Betonbauten, mit einer Schalungswandung (2, 12) aus einem durchbrochenen bzw. strukturieren Metallblech (4) und mit einer fest mit der Schalungswandung (2, 12) verbundenen flächigen Wassersperre (3, 13), **dadurch gekennzeichnet**, daß das Metallblech (4) der Schalungswandung (2, 12) zwischen Quer- und Längsstäben (5, 6) eines metallenen Traggitters angeordnet ist und daß die Wassersperre (3, 13) aus einem Blechmaterialstreifen besteht.

2. Schalung nach Anspruch 1, **dadurch gekennzeichnet**, daß das Metallblech (4) aus Streckmetall besteht.

3. Schalung nach Anspruch 1 oder 2, **dadurch gekennzeichnet**, daß zum Herstellen von zum Teil wieder zu verschließenden Durchbrüchen für Rohre oder Kabel in einer Betonwandung die Schalungswandung (2a, 2b) als Ring ausgebildet ist, auf deren Stirnseite die Wassersperre (3) im wesentlichen rechtwinklig zur Schalungswandung (2) derart befestigt ist, daß sie an mindestens einer Seite über die Schalungswandung (2) vorsteht.

4. Schalung nach Anspruch 3, **dadurch gekennzeichnet**, daß die Wassersperre (3) zwischen zwei als Ring ausgebildete Streifen (2a, 2b) aus Schalungsmaterial angeordnet ist.

5. Schalung nach einem der Ansprüche 2 bis 4, **dadurch** **gekennzeichnet**, daß die Wassersperre (3) beidseitig über die Schalungswandung (2) vorsteht.

6. Schalung nach einem der Ansprüche 2 bis 5, **gekennzeichnet durch** ihre Anordnung im Übergangsbereich zwischen einem Durchbruch und einem nachträglich zum Verschließen des Durchbruchs eingebrachten Beton.

7. Schalung nach Anspruch 1 oder 2, **dadurch gekennzeichnet**, daß für eine Verwendung als Wandabschlußschalung (12) die flächige Wassersperre (13) im wesentlichen rechtwinklig zu einer mindestens einen flächigen Streifen (12a, 12b) aus Schalungsmaterial aufweisenden Schalungswandung (12) angeordnet ist.

8. Schalung nach Anspruch 7, **dadurch gekennzeichnet**, daß die flächige Wassersperre (3) zwischen zwei fluchtend zueinander ausgerichteten Streifen (12a, 12b) aus Schalungsmaterial derart befestigt ist, daß sie beidseitig der Streifen (12a, 12b) vorsteht.

9. Schalung nach Anspruch 7 oder 8, **dadurch gekennzeichnet**, daß an der Schalungswandung (12) ein Gitterträger (18) zur Aussteifung befestigt ist.

10. Schalung nach Anspruch 9, **dadurch gekennzeichnet**, daß der Gitterträger (18) aus drei, jeweils die Spitzen eines Dreiecks bildenden Längsstäben (18a) aus Baustahl und wenigstens zwei wellenförmig gebogenen Baustahlstäben (18b) gebildet ist, wobei zwei nicht durch die wellenförmigen Baustahlstäbe (18b) verbundenen Längsstäbe (18a) des Gitterträgers (18) mit jeweils einem Längsstab (16) der Schalungswandung (12) verschweißt sind.

## Claims

1. Permanent shuttering for concrete structures, comprising a shuttering wall (2, 12) consisting of an open-work or structured metal sheet (4), and comprising a planar water barrier (3, 13) fastened to the shuttering wall (2, 12), characterized in that the metal sheet (4) of the shuttering wall (2, 12) is arranged between transverse and longitudinal bars (5, 6) of a metal supporting lattice and in that the water barrier (3, 13) consists of a strip of sheet metal material.

2. Shuttering according to Claim 1, characterized in that the metal sheet (4) consists of expanded metal.

3. Shuttering according to Claim 1 or 2, characterized in that in order to form openings, which are partly to be reclosed, for pipes or cables in a concrete wall the shuttering wall (2a, 2b) is in the form of a ring on whose face the water barrier (3) is fastened substantially at right angles to the shuttering wall (2) in such a manner that it projects beyond the shuttering wall (2) on at least one side.

4. Shuttering according to Claim 3, characterized in that the water barrier (3) is arranged between two strips (2a, 2b) of shuttering material which are in the form of a ring.

5. Shuttering according to one of Claims 2 to 4, characterized in that the water barrier (3) projects beyond the shuttering wall (2) on both sides.

6. Shuttering according to one of Claims 2 to 5, characterized by its arrangement in the transition region between an opening and concrete applied subsequently to the closing of the opening.

7. Shuttering according to Claim 1 or 2, characterized in that for use as a shuttering (12) for terminating a wall the planar washer barrier (13) is arranged substantially at right angles to a shuttering wall (12) comprising at least one planar strip (12a, 12b) of shuttering material.

8. Shuttering according to Claim 7, characterized in that the planar water barrier (3) is fastened between two strips (12a, 12b) of shuttering material, which are in alignment with one another, in such a manner that it projects on both sides of the strips (12a, 12b).

9. Shuttering according to Claim 7 or 8, characterized in that a lattice beam (18) is fastened to the shuttering wall (12) as stiffening.

10. Shuttering according to Claim 9, characterized in that the lattice beam (18) is formed by three longitudinal bars (18a) of structural steel, each forming a vertex of a triangle, and by at least two structural steel bars (18b) bent in wave form, two longitudinal bars (18a) of the lattice beam (18) which are not connected by the structural steel bars (18b) bent in wave form being in each case welded to a longitudinal bar (16) of the shuttering wall (12).

## Revendications

1. Coffrage perdu pour constructions en béton, avec une paroi (2, 12) constituée d'une tôle métallique (4) ajourée et/ou structurée et avec un barrage pour l'eau (3, 13) plan et relié de façon fixe à la paroi du coffrage, caractérisé en ce que la tôle métallique (4) de la paroi du coffrage (2, 12) est disposée entre les barres transversales et les barres longitudinales (5, 6) d'une grille porteuse en métal et que le barrage pour l'eau (3, 13) se compose d'une bande de tôle.

2. Coffrage selon la revendication 1, caractérisé par le fait que la tôle métallique (4) est en métal étiré.

3. Coffrage selon la revendication 1 ou 2, caractérisé en ce que, pour préparer des percements pour les tuyaux ou les câbles dans une paroi du coffrage qui doivent être en partie refermés, on prévoit la paroi (2a, 2b) en forme d'anneau sur la face de laquelle le barrage pour l'eau (3) est fixé principalement perpendiculairement à la paroi de coffrage (2) de telle façon qu'il dépasse sur au moins un côté au-dessus de la paroi de coffrage (2).

4. Coffrage selon la revendication 3, caractérisé en ce que le barrage pour l'eau (3) est disposé entre deux bandes (2a, 2b) conçues en forme d'anneau et à base de matériau de coffrage.

5. Coffrage selon l'une des revendications 2 à 4, caractérisé par le fait que le barrage pour l'eau (3) dépasse des deux côtés au-dessus de la paroi du coffrage (2).

6. Coffrage selon l'une des revendications 2 à 5, caractérisé par sa disposition dans la zone de transition entre un percement et un béton introduit ultérieurement pour boucher le percement.

7. Coffrage selon la revendication 1 ou 2, caractérisé par le fait que, pour une utilisation comme coffrage final de cloison (12), le barrage plan pour l'eau (13) est disposé principalement perpendiculairement à au moins une paroi de coffrage (12) présentant une bande plane (12a, 12b) en matériau de coffrage.

8. Coffrage selon la revendication 7, caractérisé en ce que le barrage pour l'eau (3) est fixé entre deux bandes (12a, 12b), en matériau de coffrage et en alignement l'une par rapport à l'autre, de telle façon qu'il déborde des deux côtés des bandes (12a, 12b).

9. Coffrage selon les revendications 7 ou 8, caractérisé en ce que un support de grille (18) est fixé sur la paroi du coffrage (12) pour le renforcement.

10. Coffrage selon la revendication 9, caractérisé en ce que le support de grille (18) est constitué de trois barres longitudinales (18a) en acier de construction constituant les sommets d'un triangle et d'au moins deux barres en acier de construction (18b), tordues en forme ondulée, deux barres longitudinales (18a) du support de grille (18) non reliées par les barres ondulées en acier de construction (18b) sont soudées chacune à une barre longitudinale (16) de la paroi du coffrage (12).
